# EUROPEAN PATENT SPECIFICATION

(11) **EP 3 575 023 B1**
(45) Date of publication and mention of the grant of the patent: **17.02.2021**
(21) Application number: 18174581.1
(22) Date of filing: 28.05.2018
(51) Int. Cl.: B23B 29/034, B23B 29/02, B23Q 11/10, B23Q 17/22, B23Q 17/24

(54) **INNER SHAFT MACHINING TOOL AND METHOD**
INNENWELLENBEARBEITUNGSWERKZEUG UND VERFAHREN
OUTIL D'USINAGE D'ARBRE INTERNE ET MÉTHODE

(43) Date of publication of application: 04.12.2019
(73) Proprietor: Koninklijke Luchtvaart Maatschappij N.V., 1182 GP Amstelveen (NL)
(72) Inventor: VAN ES, Mario Cornelis, 2375 AR Rijpwetering (NL); OTTEVANGER, Maarten, 2375 BA Rijpwetering (NL)
(74) Representative: Nederlandsch Octrooibureau

(56) References cited:
- EP-A1- 2 136 962
- DE-B- 1 086 110
- US-A- 3 981 210
- US-B1- 6 394 710
- US-B2- 8 839 699

## Description

### Field of the invention

The present invention relates to a machining tool for internal machining of a shaft with an inner bore, such as an aircraft engine turbine shaft, according to the preamble of claim 1. It also relates to a method of operating such a tool. Such a tool and method are already known from DE 10 86 110 B.

### Background art

US patent publication US-B-8,839,699 discloses a long shaft inner surface machining apparatus. A long shaft support device fixes a long shaft in order to prevent bending, the long shaft having an inner bore into which a machining head can be positioned axially using a head support device from one end of the long shaft. A blade drive device is coupled with the machining head from the other end of the long shaft to rotary drive a blade of the machining head. As the blade drive device and head support device are at opposite parts of the long shaft, this arrangement requires much space. Furthermore, the inner surface of the long shaft may be damaged by the support rollers of the support device, and it cannot be applied to axially varying diameter bores.

### Summary of the invention

The present invention seeks to provide an improved machining tool and machining method, which is particularly suited for machining an inner bore of an elongate shaft, even if the inner diameter profile of the inner bore comprises narrow openings on one or both sides of the shaft.

According to the present invention, a machining tool as defined in independent claim 1 as well as a method as defined in independent claim 10 are provided,

### Short description of drawings

The present invention will be discussed in more detail below, with reference to the attached drawings, in which
Fig. 1 shows a cross sectional view of a shaft having a profiled inner bore;
Fig. 2 shows a cross sectional view of an embodiment of the machining tool according to the present invention;
Fig. 3 shows a partial perspective view of a boring bar of an embodiment of the machining tool according to the present invention; and
Fig. 4 shows a schematic diagram of an embodiment of the machining tool according to the present invention

### Description of embodiments

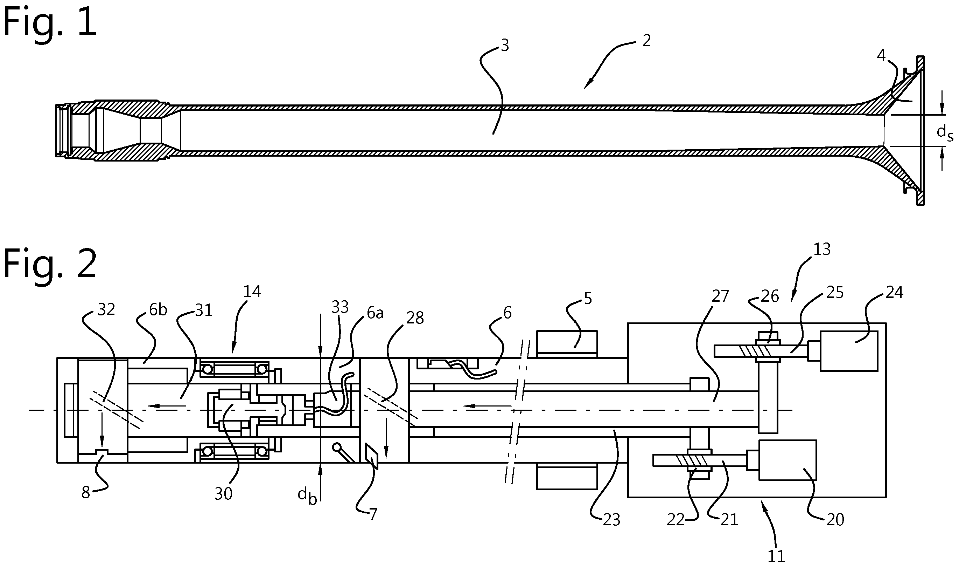

The present invention is discussed below with reference to a number of exemplary embodiments, and in general relates to machining of an inner bore of a shaft. Such a shaft with an inner bore is e.g. applied as an aircraft engine turbine shaft (fan mid shaft), more specifically to remove any possible internal corrosion in the shaft. Fig. 1 shows a cross sectional view of a shaft 2 having a profiled inner bore 3, which in this example has a restricted opening with diameter dₛ at one end 4 of the shaft 2. After prolonged use, the surface area of inner bore 3 may have internal corrosion. This corrosion must be removed per strictly regulated requirements as is customary in aircraft related maintenance. However, as a shaft 2 with corrosion cannot be assembled into an engine and, if no repair is available, must be declared scrap, the present invention embodiments would be beneficial especially for parties involved in aircraft engine maintenance, but also for aircraft operators. It is noted that the required machining operation to remove corrosion is turning, but because of poor accessibility of the internal areas of these type of shafts 2 the machining operation is far from straight forward. As shown in the example of Fig. 1, the inner bore 3 has varied sections, with possibly small opening diameters at one end, different sections with a cylindrical inner bore part or tapered inner bore part, and still a restricted opening with diameter dₛ complicating access to the long length inner bore 3.

Specific problems encountered when trying to machine the inner bore 3 of a shaft 2 are that a normal machining operation cannot be performed due to lack of proper and suitable tooling support. Without tooling support the required surface finish of the inner bore 3 and dimensional accuracy is impossible to meet. Because of this limitation a special machining tool has been developed, as described herein with reference to a number of exemplary embodiments.

Other factors that makes this type of machining operation hard to perform are that in certain applications, the material to be machined is very hard (e.g. hardened steel 54 HRc), and as mentioned above that the inner bore 3 of the shaft 2 has small diameter areas at both sides of the shaft 2, which hinders machining operation.

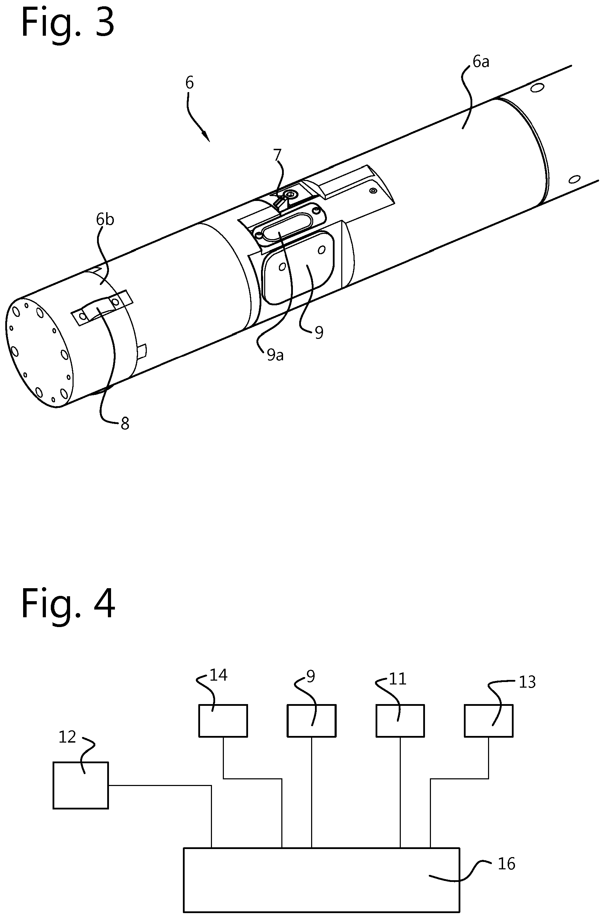

According to the present invention, a machining tool is provided for internal machining of a shaft 2 with an inner bore 3, wherein the machining tool comprises an external boring bar support device 5 and a boring bar 6 as shown in the cross sectional view of Fig. 2, and in the perspective partial view of Fig. 3. The boring bar 6 has a diameter d_{b} smaller than a smallest opening with diameter dₛ, see Fig. 1 above on one side 4 of the inner bore 3 of the shaft 2. Furthermore, the boring bar 6 comprises a radially extensible cutting insert 7, and an end part 6b of the boring bar 6 rotatably connected to a main part 6a of the boring bar 6. Lastly, the end part 6b is provided with one or more radially moveable guiding pads 8. Using the present invention machining tool, it is possible to access the inner bore 3 only from the one side 4, yet also have the boring bar 6 fully supported to allow precise machining. The external bar support device 5 may be e.g. implemented as a support bearing which during inserting and extracting of the boring bar 6 is held at a certain distance from the one end 4 of the shaft 2, i.e. remote from the cutting insert 7 (and end part 6a of the shaft 6). Such an external bar support device 5 prevents collision of the boring bar 6 with the smallest opening with diameter dₛ, see Fig. 1 above on one side 4 of the inner bore 3 of the shaft because the boring bar 6 could bend as much as at least 10 mm downwards due to its mass. The support pads 8 ensure that a required dimensional accuracy, runout accuracy and surface finish can be obtained by providing a rigid support of the shaft 2 during the machining operation. Lacking of a proper machining tool support can cause vibrations which would result in a poor surface finish.

It is noted that as shown in the exemplary embodiment of Fig. 2 and 3, the boring bar 6 according to the invention comprises a main part 6a and an end part 6b, wherein the end part 6b of the boring bar 6 is rotatably connected relative to the main part 6a of the boring bar 6. The one or more radially moveable guiding pads 8 are configured to releasably clamp the end part 6b to the inner bore 3 of the shaft 2. As the radially extensible cutting insert 7 is provided on the main part 6a, this configuration allows to operate on the inner surface of the bore 3 in a very precise and controlled manner.

As the cutting insert 7 is radially extensible, the boring bar diameter d_{b} can be selected as high as possible for a specific type of shaft 2 with inner bore 3, in order to obtain sufficient rigidity over the long length of the shaft 2. In an exemplary embodiment, the operational machining length is 2130mm, and a minimum diameter is 92mm, so a ratio of operational machining length to diameter of the boring bar (6) can be in the order of 20 (more specifically 23), and is possibly within a range of 10-30.

By having the support pads 8 in the end part 6b of the boring bar 6, wherein the end part 6b can rotate with respect to the main part 6a of the boring bar 6, it is possible to have a non-rotating support of the machining tool (with respect to the surface of the inner bore 3). This also makes it possible to machine internal areas of the shaft 2 which otherwise cannot be machined at all with existing solutions. These support pads 8 can follow the internal diameter variation of the inner bore 3 in axial direction (e.g. using a continuously monitored extension pressure, see further below). Without these support pads 8 the boring bar 6 of a machining tool could bend as much as at least 10 mm downwards because of its mass. This makes machining impossible and causes collisions between the machining tool and the shaft 2.

Because of the rotating end part 6b of the boring bar 6, which holds the support pads 8 there is no damage of the internal surface of the inner bore 3 of the shaft 2. The support pads 8 are only sliding in an axial direction with respect to the internal surface of the inner bore 3. In further exemplary embodiments, the end part 6b is provided with at least three radially moveable guiding pads 8, e.g. at 120° intervals (i.e. evenly distributed around the circumference of the end part 6b). This allows a precise axial alignment of the boring bar 6 in the inner bore 3. The guiding pads 8 may comprise a plastic material, even further lessening the chance of damage to the inner bore 3.

In a further embodiment, the main part 6a of the boring bar 6 is connected to an axial drive unit 11, to allow machining (and measurement) along a large part of the inner bore 3 by moving the boring bar 6 left and right in the inner bore 3. The axial drive unit 11 may be implemented in various manners, of which one example is shown in the embodiment shown in Fig. 2. Here, the axial drive unit comprises a motor 20 connected to a rotating axis 21 provided with a worm wheel 22. The rotation of the worm wheel 22 causes translational (left and right) motion of a connecting element 23 fixed to the boring bar 6 (supported by external boring bar support device 5).

The cutting insert 7 as shown in the Fig. 2 and 3 exemplary embodiments is controlled to follow a pre-programmed path when the boring bar 6 moves in axial direction during use. Because of this feature, the diameter d_{b} of the boring bar 6 of the machining tool can be made as large in diameter and as rigid as possible. As mentioned above, rigidity of the machining tool is a key feature for a successful machining operation. To this end, according to the present invention, a method of operating the machining tool according to any one of the embodiments described herein is provided, the method comprising machining the inner bore 3 according to a predetermined machining profile by i remotely controlling the one or more radially moveable guiding pads and by remotely controlling adjustment of the cutting diameter of the radially extensible cutting insert 7 as function of an axial position of the radially extensible cutting insert 7. Precise control may be obtained in various control system embodiments, e.g. using a computer numerical control (CNC) unit.

It is noted that internal diameters cannot be measured with conventional inspection tooling of a shaft 2 with an inner bore 3. Visibility before, during and after the machining operation might even require custom made vision equipment, and required minimum surface finish may require custom made surface finish measurement tooling. To address these issues, in a further embodiment, the main part 6a of the boring bar 6 further comprising an inner bore diameter measurement device 9, axially positioned near to the radially extensible cutting insert 7. As an example, the inner bore diameter measurement device 9 is a laser based measurement device 9, as shown in the partial perspective view of Fig. 3.

As shown in the embodiment of Fig. 3, the laser based measurement device 9 is co-located with cutting insert 7 in the main part 6a of the boring bar 6, and using a laser beam directed away from the boring bar 6 as indicated by the solid line. The laser based measurement device 9 can be built in the boring bar 6 of the machining tool, e.g. as shown in Fig. 3 in a dedicated cavity within the main part 6a of the boring bar 6. The inner bore measurement device 9 is arranged for measuring a distance, which can be recalculated to determine an axial profile of inner bore 3.

The inner bore diameter measurement device 9 may comprise a protection cover 9a as shown in Fig. 3 embodiment, in order to protect the (sensitive) electronic and optical components from the environment during turning, such as a cooling liquid.

In operation, the (build-in laser) inner bore diameter measurement device 9 measures the internal diameter before and after the machining operation at programmable locations in a further method embodiment of the present invention. Conventional inspection tools to determine internal diameters are not useable.

To this end, the method embodiment as described above, may further comprise measuring an inner bore axial diameter profile before and/or after the machining of the inner bore 3. The measurement before machining can be used to determine an initial profile, match it with a desired profile and determine where e.g. internal corrosion is present. However this is optional, the machining can also be executed using a pre-stored profile. The measurement after machining can then be used to check whether the inner bore 3 is within desired specifications.

In a further embodiment, measuring comprises measuring the inner bore axial diameter profile at a plurality of predetermined axial locations along the inner bore 3. When taking sufficient measurements, or using known parameters of the inner bore 3 profile (e.g. number of straight, tapered, and/or complex form sections of the inner bore 3), it is possible to determine a proper inner bore axial diameter profile.

In an even further embodiment, the method may comprise converting the measured inner bore axial diameter profile to a predetermined machining profile. Such a predetermined machining profile may then e.g. be used for batch processing of a number of shafts 2 in sequence.

The CNC unit may be implemented as a single unit, or as a combination of separate control units (possibly interconnected). This allows to be able to work with tapered diameters of the inner bore 3 and smooth transitions between non-machined and machined areas, possibly using custom made CNC control software.

According to the invention, the radially extensible cutting insert 7 is remotely controlled by a cutting diameter setting unit , preferably a numerically controlled cutting diameter setting unit 13. An implementation thereof is shown in the cross sectional view of Fig. 2, wherein the cutting diameter setting unit 13 comprises a motor 24 rotationally driving an axis 25 provided with a worm wheel unit 26. This provides translation movement of a rod 27, which translational movement is converted in a radially extending movement of the cutting insert 7 by a conversion unit 28, as indicated by the arrows.

According to the invention, the radially moveable guiding pads 8 are remotely controlled by a guiding pad diameter setting unit preferably a numerically controlled guiding pad diameter setting unit 14. n the embodiment shown in cross section in Fig. 2, the guiding pad diameter setting unit 14 comprises a number of components, of which the majority is located in the end part 6b of the boring bar 6. In this embodiment, an electric actuator 30 is arranged to move a connecting rod 31 in axial direction (arrow to the left), and via a converter element 32, radially extend the guiding pads 8 (arrow towards guiding pad 8). The electric actuator 30 is driven via an electric wire 33 which is guided through the internal area of the boring bar 6.

The guiding pad diameter setting unit 14 may further be provided with a torque sensing device in a further embodiment, e.g. at one or more of the radially moveable guiding pads (8). This allows to arrange for a feedback control loop for accurately keeping the boring bar 6 centred within the inner bore 3 during operation.

Alternatively or additionally, the radially moveable guiding pads, or components thereof, may be fitted with force sensors, allowing a continuously monitored extension pressure of the guiding pads 8 (again e.g. using a feedback control loop).

For operational control of the machining tool, a tool control unit 16 is provided in a further embodiment, which is connected to the optionally present axial drive unit 11, cutting diameter setting unit 13, guiding pad diameter setting unit 14, and/or inner bore diameter measurement device 9. This exemplary set-up is shown in the schematic diagram of Fig. 4.

It is noted that for the machining operation, the shaft 2 may be rotationally driven, i.e. in a circumferential direction, while the boring bar 6 is only axially moving, and not rotating. To this end, the machining tool may further comprise a rotational drive unit 12 (possibly connected to and controlled by the tool control unit 16).

With machining of an inner bore 3 of a shaft 2, it is possible that produced metal chips and/or further debris will collect inside the shaft 2 and these must be removed before these can disturb the machining operation or damage the machined areas. In a further embodiment of the present invention machining tool, coolant, required for machining, is flushed backward thus preventing being entrapped between guiding pads 8 and inner surface of the inner bore 3 of the shaft 2 which could otherwise result in damages of the inner surface. Construction wise, the machining tool may further comprise a coolant supply device arranged to flush a coolant liquid during operation in a direction from the guiding pads (8) to the radially extensible cutting insert (7), i.e. towards the one end of the inner bore 3.

The present invention has been described above with reference to a number of exemplary embodiments as shown in the drawings. Modifications and alternative implementations of some parts or elements are possible within the scope of the appended claims.

## Claims

1. Machining tool for internal machining of a shaft (2) with an inner bore (3), comprising
an external boring bar (6) support device (5),a boring bar (6) configured to have a diameter smaller than a smallest opening on one side (4) of the inner bore (3) of the shaft (2) to be internally machined, the boring bar (6) comprising
a radially extensible cutting insert (7), and an end part (6b) of the boring bar (6) rotatably connected to a main part (6a) of the boring bar (6),
wherein the end part (6b) is provided with one or more radially moveable guiding pads Z (8),
**characterised in that** the one or more radially moveable guiding pads (8) are remotely controlled by a guiding pad diameter setting unit (14) further comprised in the machining tool, and **in that** the radially extensible cutting insert (7) is remotely controlled by a cutting diameter setting unit (13) further comprised in the machining tool.

2. Machining tool according to claim 1, wherein the end part (6b) is provided with at least three radially moveable guiding pads (8).

3. Machining tool according to claim 1 or 2, wherein the guiding pads (8) comprise a plastic material.

4. Machining tool according to any one of claims 1-3, the main part (6a) of the boring bar (6) further comprising an inner bore diameter measurement device (9), axially positioned near to the radially extensible cutting insert (7).

5. Machining tool according to claim 4, wherein the inner bore diameter measurement device (9) is a laser based measurement device (9).

6. Machining tool according to claim 4 or 5, wherein the inner bore diameter measurement device (9) comprises a protection cover (9a).

7. Machining tool according to any one of claims 1-6, further comprising a coolant supply device arranged to flush a coolant liquid during operation in a direction from the guiding pads (8) to the radially extensible cutting insert (7).

8. Machining tool according to claim 7, wherein the guiding pad diameter setting unit (14) is provided with a torque sensing device.

9. Machining tool according to any one of claims 1-8, further comprising a tool control unit (16), connected to the optionally present axial drive unit (11), cutting diameter setting unit (13), guiding pad diameter setting unit (14), and/or inner bore diameter measurement device (9).

10. Method of operating the machining tool according to any one of claims 1-9, **characterised in that** the method comprises machining the inner bore (3) according to a predetermined machining profile by remotely controlling the one or more radially moveable guiding pads (8) and by remotely controlling adjustment of the cutting diameter of the radially extensible cutting insert (7) as function of an axial position of the radially extensible cutting insert (7).

11. Method according to claim 10, further comprising measuring an inner bore axial diameter profile before and/or after the machining of the inner bore (3).

12. Method according to claim 11, wherein measuring comprises measuring the inner bore axial diameter profile at a plurality of predetermined axial locations along the inner bore (3).

13. Method according to claim 12, further comprising converting the measured inner bore axial diameter profile to a predetermined machining profile.

## Patentansprüche

1. Zerspanungswerkzeug zur inneren zerspanenden Bearbeitung einer Welle (2) mit einer Innenbohrung (3), umfassend
eine externe Trägervorrichtung (5) für eine Bohrstange (6), eine Bohrstange (6), die dazu ausgestaltet ist, einen Durchmesser aufzuweisen, der kleiner ist als eine kleinste Öffnung an einer Seite (4) der Innenbohrung (3) der innen zu zerspanenden Welle (2), wobei die Bohrstange (6)
einen radial erweiterbaren Schneideinsatz (7) umfasst, und ein Endteil (6b) der Bohrstange (6) drehbar mit einem Hauptteil (6a) der Bohrstange (6) verbunden ist,
wobei der Endteil (6b) mit einem oder mehreren radial beweglichen Führungspads (8) versehen ist,
**dadurch gekennzeichnet, dass** das eine oder die mehreren radial beweglichen Führungspads (8) durch eine Führungspaddurchmesser-Einstelleinrichtung (14) ferngesteuert werden, die ebenfalls Bestandteil des Zerspanungswerkzeugs ist, und
dass der radial erweiterbare Schneideinsatz (7) durch eine Schneidedurchmesser-Einstelleinrichtung (13) ferngesteuert wird, die ebenfalls Bestandteil des Zerspanungswerkzeugs ist.

2. Zerspanungswerkzeug nach Anspruch 1, wobei der Endteil (6b) mit zumindest drei radial beweglichen Führungspads (8) versehen ist.

3. Zerspanungswerkzeug nach Anspruch 1 oder 2, wobei die Führungspads (8) ein Kunststoffmaterial aufweisen.

4. Zerspanungswerkzeug nach einem der Ansprüche 1 bis 3, wobei der Hauptteil (6a) der Bohrstange (6) weiter eine Innenbohrungsdurchmesser-Messvorrichtung (9) aufweist, die axial in der Nähe des radial erweiterbaren Schneideinsatzes (7) positioniert ist.

5. Zerspanungswerkzeug nach Anspruch 4, wobei die Innenbohrungsdurchmesser-Messvorrichtung (9) eine laserbasierte Messvorrichtung (9) ist.

6. Zerspanungswerkzeug nach Anspruch 4 oder 5, wobei die Innenbohrungsdurchmesser-Messvorrichtung (9) eine Schutzabdeckung (9a) aufweist.

7. Zerspanungswerkzeug nach einem der Ansprüche 1 bis 6, weiter aufweisend eine Kühlmittel-Zufuhrvorrichtung, die angeordnet ist, um während des Betriebs eine Kühlflüssigkeit in eine Richtung von den Führungspads (8) zu dem radial erweiterbaren Schneideinsatz (7) zu spülen.

8. Zerspanungswerkzeug nach Anspruch 7, wobei die Führungspaddurchmesser-Einstelleinrichtung (14) mit einer Drehmoment-Erfassungsvorrichtung versehen ist.

9. Zerspanungswerkzeug nach einem der Ansprüche 1 bis 8, weiter aufweisend eine Werkzeug-Steuereinrichtung (16), die mit einer optional vorhandenen Axialantriebseinheit (11), der Schneidedurchmesser-Einstelleinrichtung (13), der Führungspaddurchmesser-Einstelleinrichtung (14), und/oder der Innenbohrungsdurchmesser-Messvorrichtung (9) verbunden ist.

10. Verfahren zum Betreiben des Zerspanungswerkzeugs nach einem der Ansprüche 1 bis 9, **dadurch gekennzeichnet, dass** das Verfahren umfasst:
zerspanendes Bearbeiten der Innenbohrung (3) gemäß einem vorbestimmten Zerspanungsprofil, durch Fernsteuern des einen oder der mehreren radial beweglichen Führungspads (8) und durch Fernsteuern der Einstellung des Schneidedurchmessers des radial erweiterbaren Schneideinsatzes (7) in Abhängigkeit von einer axialen Position des radial erweiterbaren Schneideinsatzes (7).

11. Verfahren nach Anspruch 10, weiter aufweisend ein Messen eines axialen Durchmesserprofils der Innenbohrung vor und/oder nach der zerspanenden Bearbeitung der Innenbohrung (3).

12. Verfahren nach Anspruch 11, wobei das Messen ein Messen des axialen Durchmesserprofils der Innenbohrung an einer Vielzahl von vorbestimmten axialen Positionen entlang der Innenbohrung (3) beinhaltet.

13. Verfahren nach Anspruch 12, weiter aufweisend ein Umwandeln des gemessenen axialen Durchmesserprofils der Innenbohrung in ein vorbestimmtes Zerspanungsprofil.

## Revendications

1. Outil d'usinage pour un usinage interne d'un arbre (2) avec un alésage intérieur (3), comprenant
un dispositif de support (5) de barre d'alésage externe (6), une barre d'alésage (6) configurée pour avoir un diamètre inférieur à une plus petite ouverture sur un premier côté (4) de l'alésage interne (3) de l'arbre (2) devant être usiné intérieurement, la barre d'alésage (6) comprenant
un insert de coupe extensible radialement (7), et une partie d'extrémité (6b) de la barre d'alésage (6) reliée de manière rotative à une partie principale (6a) de la barre d'alésage (6),
dans lequel la partie d'extrémité (6b) est pourvue d'un ou plusieurs patins de guidage mobiles radialement (8), **caractérisé en ce que** les un ou plusieurs patins de guidage (8) mobiles radialement sont commandés à distance par une unité de réglage de diamètre de patin de guidage (14) incluse en outre dans l'outil d'usinage, et **en ce que** l'insert de coupe extensible radialement (7) est commandé à distance par une unité de réglage de diamètre de coupe (13) incluse en outre dans l'outil d'usinage.

2. Outil d'usinage selon la revendication 1, dans lequel la partie d'extrémité (6b) est pourvue d'au moins trois patins de guidage mobiles radialement (8).

3. Outil d'usinage selon la revendication 1 ou 2, dans lequel les patins de guidage (8) comprennent une matière plastique.

4. Outil d'usinage selon l'une quelconque des revendications 1 à 3, la partie principale (6a) de la barre d'alésage (6) comprenant en outre un dispositif de mesure de diamètre d'alésage interne (9), positionné axialement à proximité de l'insert de coupe extensible radialement (7).

5. Outil d'usinage selon la revendication 4, dans lequel le dispositif de mesure de diamètre d'alésage interne (9) est un dispositif de mesure à laser (9).

6. Outil d'usinage selon la revendication 4 ou 5, dans lequel le dispositif de mesure de diamètre d'alésage interne (9) comprend un couvercle de protection (9a).

7. Outil d'usinage selon l'une quelconque des revendications 1 à 6, comprenant en outre un dispositif d'alimentation en liquide de refroidissement agencé pour rincer un liquide de refroidissement pendant une opération dans une direction allant des patins de guidage (8) à l'insert de coupe extensible radialement (7).

8. Outil d'usinage selon la revendication 7, dans lequel l'unité de réglage de diamètre de patin de guidage (14) est pourvue d'un dispositif de détection de couple.

9. Outil d'usinage selon l'une quelconque des revendications 1 à 8, comprenant en outre une unité de commande d'outil (16), reliée à l'unité d'entraînement axial facultativement présente (11), une unité de réglage de diamètre de coupe (13), une unité de réglage de diamètre de patin de guidage (14), et/ou un dispositif de mesure de diamètre d'alésage intérieur (9).

10. Procédé d'actionnement de l'outil d'usinage selon l'une quelconque des revendications 1 à 9, **caractérisée en ce que** le procédé comprend l'usinage de l'alésage intérieur (3) selon un profil d'usinage prédéterminé en commandant à distance les un ou plusieurs patins de guidage (8) mobiles radialement et en commandant à distance l'ajustement du diamètre de coupe de l'insert de coupe extensible radialement (7) en fonction d'une position axiale de l'insert de coupe extensible radialement (7).

11. Procédé selon la revendication 10, comprenant en outre la mesure d'un profil de diamètre axial d'alésage interne avant et/ou après l'usinage de l'alésage interne (3).

12. Procédé selon la revendication 11, dans lequel la mesure comprend la mesure du profil de diamètre axial d'alésage interne au niveau d'une pluralité d'emplacements axiaux prédéterminés le long de l'alésage interne (3).

13. Procédé selon la revendication 12, comprenant en outre la conversion du profil de diamètre axial d'alésage interne mesuré en un profil d'usinage prédéterminé.
